# EUROPÄISCHE PATENTSCHRIFT

(11) **EP 0 789 923 B1**
(45) Veröffentlichungstag und Bekanntmachung des Hinweises auf die Patenterteilung: **17.06.1998**
(21) Anmeldenummer: 95935844.1
(22) Anmeldetag: 03.11.1995
(51) Int. Cl.: H01F 41/10, B23K 1/00, H01R 4/02

(54) **VERFAHREN UND VORRICHTUNG ZUM KONTAKTIEREN DES WICKLUNGSDRAHTES EINER SPULE**
PROCESS AND DEVICE FOR CONTACTING THE WINDING WIRE OF A COIL
PROCEDE ET DISPOSITIF D'ETABLISSEMENT DU CONTACT POUR LE FIL D'ENROULEMENT D'UNE BOBINE

(30) Priorität: 04.11.1994 DE 4439391; 13.10.1995 DE 19538231
(43) Veröffentlichungstag der Anmeldung: 20.08.1997
(73) Patentinhaber: SIEMENS AKTIENGESELLSCHAFT, 80333 München (DE)
(72) Erfinder: DITTMANN, Michael, D-12207 Berlin (DE); VOJTA, Erich, D-91334 Hemhofen (DE)
(86) Internationale Anmeldenummer: DE9501527
(87) Internationale Veröffentlichungsnummer: WO9614647

(56) Entgegenhaltungen:
- EP-A- 0 478 161
- EP-A- 0 651 407
- BE-A- 665 869
- DE-A- 2 063 535
- DE-C- 2 301 094

## Beschreibung

Die Erfindung betrifft ein Verfahren zum Kontaktieren des Wicklungsdrahtes einer Spule mit einem Anschlußstift, wobei ein Endabschnitt des Wicklungsdrahtes mit mehreren Windungen um einen Endabschnitt des Anschlußstiftes geschlungen wird, wobei der Anschlußstift dann mit einem flußmittelfreien Weichlot in Kontakt gebracht und dieses schließlich durch eine berührungslose Wärmezufuhr unter Schutzgas bei Löttemperatur aufgeschmolzen wird und eine Vorrichtung zum Löten von Wicklungsenden an Anschlußstiften einer Spule.

Um die unerwünschten Flußmittel und Lötbäder bei der Herstellung insbesondere von Relaisspulen zu vermeiden, wird in der EP-0 651 407-A1 eine Verbindung mittels eines Weichlotes vorgeschlagen, das flußmittelfrei unter Schutzgas aufgeschmolzen wird. Als bevorzugtes Verfahren wird dort auch bereits eine Lichtbogen-Inert-Gas-Lötung analog zu der bereits bekannten WIG-Schweißung (Wolfram-Inert-Gas-Schweißung) vorgeschlagen, wobei also nicht wie beim Schweißverfahren der Anschlußstift selbst mit dem Wicklungsdraht aufgeschmolzen wird, sondern der Lichtbogen so dimensioniert wird, daß lediglich das Weichlot verflüssigt wird. Auf diese Weise wird die Wärmebelastung für den Spulenkörper und den Wicklungsdraht deutlich vermindert.

Bei dem dort beschriebenen WIG-Löten wird der Lichtbogen zwischen dem Anschlußstift und einer Gegenelektrode gezündet. Dabei könnten sich allerdings dann Probleme ergeben, wenn etwa bei Spulen für Miniaturrelais Anschlußstifte verwendet werden, deren Dicke weit unter 1 mm liegt, also beispielsweise 0,2 bis 0,4 mm beträgt. Solche Anschlußstifte sind wegen der entsprechend kleinen Spulenabmessung und ihres eigenen Querschnitts nur schwer zu kontaktieren. Unter Umständen sind sie auch nicht mehr in der Lage, den bei üblichen WIG-Stromquellen erzeugbaren Minimalstrom von beispielsweise 1 A zu leiten.

Ziel der vorliegenden Erfindung ist deshalb eine Weiterbildung der WIG-Lichtbogenlötung in der Weise, daß auch Spulenanschlüsse mit kleinsten Abmessungen auf einfache Weise und mit minimaler Wärmebelastung gelötet werden können.

Erfindungsgemäß wird dieses Ziel mit einem Verfahren der eingangs genannten Art dadurch erreicht, daß der bewickelte Endabschnitt des Anschlußstiftes in der Nähe von zwei einander mit ihren Spitzen gegenüberstehenden Elektroden angeordnet wird und daß zwischen den beiden Elektroden ein Lichtbogen gezündet wird, deren Stärke und Brenndauer auf das Schmelzen des Weichlotes abgestimmt ist.

Bei der Erfindung wird also mit einem sogenannten nicht übertragenen Lichtbogen gearbeitet, bei dem der Lichtbogen nicht am Anschlußstift selbst, sondern zwischen zwei davon getrennten Elektroden gezündet wird, so daß das Weichlot aufgrund der Strahlungswärme aufgeschmolzen wird. Der Anschlußstift selbst wird also überhaupt nicht kontaktiert, und weil er an der Zündung des Lichtbogens nicht beteiligt ist, braucht er auch nicht zu einer Gegenelektrode auf genauen Abstand justiert zu werden. Die beiden Elektroden selbst werden einmal auf den richtigen Abstand zueinander eingestellt und mit der Stromversorgung kontaktiert, während die Anschlußstifte der einzelnen Spulen lediglich im Durchlauf an die beiden Elektroden angenähert zu werden brauchen, bevor der Lichtbogen wieder neu gezündet wird. Zweckmäßigerweise wird der Anschlußstift mit seinem Ende so zwischen die beiden Elektrodenspitzen gebracht, daß es annähernd bündig zu der Verbindungslinie zwischen den Elektrodenspitzen steht. Die Elektroden selbst können unter einem Winkel zueinander stehen, der von annähernd 0° (Elektroden parallel) bis zu 180° (Elektroden in einer Linie fluchtend) reichen kann. Als zweckmäßig hat sich erwiesen, die Elektroden unter einem Winkel von etwa 130° zueinander anzuordnen.

Bei dem bekannten Verfahren gemäß EP-0 651 407-A1 wird das Weichlot beispielsweise durch kurzzeitiges Eintauchen der Anschlußstifte in ein Lötbad vorläufig aufgebracht und dann in einem weiteren Arbeitsgang durch den Lichtbogen nochmals aufgeschmolzen. Es sind also zwei Arbeitsgänge notwendig, wobei das Lot zwischenzeitlich erkaltet und dabei auch einer, wenn auch geringen, Oxydation unterliegt. In einem anderen Ausführungsbeispiel wird dort vorgeschlagen, das Weichlot in Form eines Drahtes mit dem Anschlußstift in Berührung zu bringen und das Ende des Drahtes mit dem Lichtbogen abzuschmelzen. Dabei muß der Draht nach jedem Lötvorgang zurückgezogen werden, wobei das angeschmolzene Ende wieder erstarrt und ebenfalls einer gewissen Oxydation unterliegt.

Aus der EP 0 478 161 B1 ist eine Löteinrichtung mit einem Düsenkopf bekannt, bei dem das Lötmittel durch eine Wärmequelle im Inneren des Düsenkopfes geschmolzen und dann in flüssigem Zustand über eine offene Spitze unter Schutzgas auf eine Zieloberfläche ausgebracht wird. Allerdings enthält dort der Düsenkopf für den eigentlichen Lötvorgang eine in herkömmlicher Weise beheizte Lötspitze, so daß auch in herkömmlicher Weise ein zusätzliches Flußmittel erforderlich ist.

Damit bei dem erfindungsgemäßen Verfahren das Lot in einem einzigen Arbeitsgang zugeführt und die endgültige Lötung ohne zwischenzeitliches Erstarren bzw. ohne die Möglichkeit einer zwischenzeitlichen Oxydation durchgeführt werden kann, ist in einer Weiterbildung vorgesehen, daß das Weichlot über ein beheizbares Rohr, aus welchem es in flüssiger Form austritt, im Bereich der Schutzgasatmosphäre mit dem Anschlußstift in Berührung gebracht wird und daß dann der Anschlußstift durch den Lichtbogen erwärmt wird, wodurch das Weichlot in den Fügebereich des Wicklungsdraht-Endabschnittes auf dem Anschlußstift fließt.

Auf diese Weise wird also das Weichlot über das beheizte Rohr bereits in flüssiger Form in den Schutzgasbereich gebracht und dann durch das kurzzeitige Zünden des Lichtbogens weiter erwärmt, so daß es dünnflüssiger wird und in den Fügebereich des Wicklungsanschlusses läuft. Wie bereits beim Stand der Technik, wird auch in diesem Fall durch den Lichtbogen die Isolierung des Wicklungsdrahtes abgebrannt, so daß eine gute Kontaktierung entsteht. Das flußmittelfreie Weichlot kann dabei in Form eines Drahtes in das beheizte Rohr eingeführt und während des Durchlaufes aufgeschmolzen werden, wobei zunächst eine Temperatur ausreicht, die nur wenig über der Schmelztemperatur des Lotes liegt.

Vorzugsweise wird der bewickelte Endabschnitt des Anschlußstiftes in der Nähe von zwei einander mit ihren Spitzen gegenüberstehenden Elektroden angeordnet, zwischen denen dann der Lichtbogen gezündet wird. Auf diese Weise braucht der Anschlußstift selbst überhaupt nicht kontaktiert zu werden, und weil er an der Zündung des Lichtbogens nicht beteiligt ist, braucht er auch nicht zu einer Gegenelektrode auf genauen Abstand justiert zu werden. Die beiden Elektroden selbst werden in diesem Fall einmal auf den richtigen Abstand zueinander eingestellt und mit der Stromversorgung kontaktiert, während die Anschlußstifte der einzelnen Spulen lediglich im Durchlauf an die beiden Elektroden angenähert zu werden brauchen, bevor der Lichtbogen wieder neu gezündet wird. Zweckmäßigerweise wird der Anschlußstift mit seinem Ende so zwischen die beiden Elektrodenspitzen gebracht, daß es annähernd bündig zu der Verbindungslinie zwischen den elektrodenspitzen steht.

Eine Vorrichtung gemäß Anspruch 10 und zur Durchführung des erfindungsgemäßen verfahrens besitzt grundsätzlich einen Aufbau, wie er aus dem Dokument DE-A-23 01 094 in Verbindung mit DE-A-20 63 535 bekannt ist. Die bekannte Vorrichtung umfaßt
- eine Aufnahme für einen Spulenkörper mit Anschlußstiften,
- eine Halterung für zwei stabförmige Elektroden,
- eine Strömungsvorrichtung zur Zufuhr von Schutzgas zum Bereich der beiden Elektrodenspitzen,
- eine Positionierungseinrichtung, um jeweils einen Anschlußstift eines in der Aufnahme befindlichen Spulenkörpers mit seinem freien Ende in einem vorgegebenen Abstand zu einer zugehörigen Elektrodenspitze zu positionieren, und
- eine Stromversorgung für die beiden Elektroden zur Erzeugung eines Lichtbogens mit vorgegebener Stärke und Brenndauer.

Bei dieser bekannten Vorrichtung sind jedoch die beiden Elektroden parallel geschaltet, so daß zwei parallele Lichtbögen zwischen jeweils einer Elektrode und jeweils einem gegenüberstehenden Anschlußstift gezündet werden. Die damit verbundenen Probleme sind bereits anfangs erläutert worden.

Die erfindungsgemäße Vorrichtung ist deshalb dadurch gekennzeichnet, daß die beiden Elektroden mit ihren Spitzen einander in einem vorgegebenen, von Null verschiedenen Winkel und in einem vorgegebenen Abstand gegenüberstehen, daß die Positioniereinrichtung eingerichtet ist, um den Anschlußstift mit einem vorgegebenen Abstand zu beiden Elektrodenspitzen in einen Mittelbereich zwischen diesen zu positionieren, und daß der Lichtbogen durch entsprechende Schaltung der Stromversorgung zwischen den beiden Elektroden gezündet wird.

In einer zweckmäßigen Ausgestaltung besitzt die Vorrichtung zusätzlich ein beheizbares Rohr zur Zufuhr von verflüssigtem Weichlot in den Lötbereich, wobei mindestens eine der Elektroden dem Ausgang des beheizbaren Rohres in einem vorgegebenen Abstand gegenübersteht. In einer bevorzugten Ausführungsform ist weiterhin vorgesehen, daß das beheizbare Rohr für die Zufuhr des Weichlotes konzentrisch in einer Zufuhröffnung für das Schutzgas angeordnet ist.

Die Erfindung wird nachfolgend an einem Ausführungsbeispiel anhand der Zeichnung näher erläutert. Es zeigt
Figur 1 eine schematisierte Lichtbogen-Lötvorrichtung,
Figur 2 eine Detaildarstellung der Elektrodenspitzen und eines Anschlußstiftes mit einer leichten Abwandlung gegenüber Figur 1 und
Figur 3 eine gegenüber Figur 1 abgewandelte Ausführungsform der Lichtbogen-Lötvorrichtung.

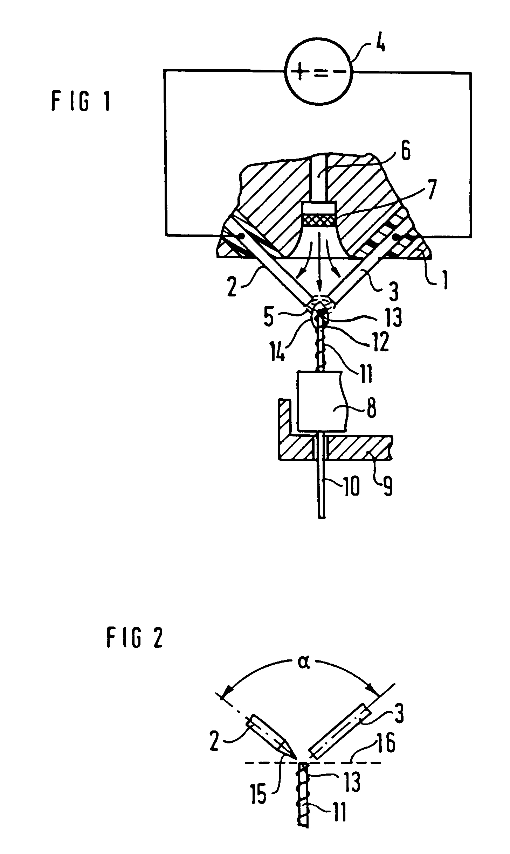

Die in Figur 1 schematisch gezeigte Lichtbogen-Lötvorrichtung umfaßt eine nur ausschnittsweise dargestellte Halterung 1 für zwei Elektroden 2 und 3, die isoliert in der Halterung 1 befestigt und an eine Stromquelle 4 angeschlossen sind. Mit einem Hochfrequenzimpuls wird zwischen den Elektrodenspitzen jeweils kurzzeitig ein Lichtbogen 5 gezündet, dessen Stärke und Brenndauer entsprechend dem zu lötenden Spulenanschluß eingestellt wird. Diese Regelungseinrichtung ist nicht dargestellt, da sie von herkömmlichen Schweißstromversorgungen übernommen werden kann. In Richtung auf den Lichtbogen wird über einen Strömungskanal 6 und ein Gassieb 7 Schutzgas geblasen, beispielsweise reines Argon oder Argon mit einem Zusatz von beispielsweise 5 % Wasserstoff (H₂).

Zur erfindungsgemäßen Schutzgaslötung wird ein Spulenkörper 8, von dem nur ein kleiner Flanschteil gezeigt ist, in einer Aufnahme 9 zur Bearbeitung transportiert. In dem Spulenkörper 8 ist ein Anschlußstift 10 verankert, an dessen Endabschnitt 11 ein Endabschnitt 12 einer Spulenwicklung mit mehreren Windungen angewickelt ist. Auf das freie Ende 13 des Anschlußstifte 10 wird nun eine bestimmte Menge an flußmittelfreiem Weichlot 14 aufgebracht. Dies kann entsprechend dem Hauptpatent vorzugsweise durch Eintauchen des Endabschnittes 12 in ein Weichlotbad erfolgen, dessen Temperatur nur wenig über dem Schmelzpunkt des Weichlotes liegt. Das Weichlot 14 benetzt dann gemäß Darstellung in Figur 1 in Form eines Tropfens das freie Ende 13 des Anschlußstiftes 10. Nunmehr wird der Spulenkörper 8 durch die Aufnahme 9 so positioniert, daß das freie Ende 13 des Anschlußstiftes 10 mit dem anhaftenden Weichlot-Tropfen 14 zwischen den Enden der beiden Elektroden 2 und 3 positioniert wird, so daß es beim Zünden des Lichtbogens 5 in dessen Wärmestrahlungsbereich liegt. Mit diesem Lichtbogen wird dann das Weichlot 14 aufgeschmolzen und stellt einen zuverlässigen Kontakt zwischen dem Anschlußstift 10 und dem angewickelten Endabschnitt 12 des Wicklungsdrahtes her. Dabei wird selbstverständlich auch die Lackisolierung des Wicklungsdrahtes abgeschmolzen.

In Figur 2 ist in einer Detaildarstellung die Anordnung der beiden Elektroden 2 und 3 noch einmal gezeigt, wobei in diesem Fall die Anode 2 mit einer Spitze 15 versehen ist. Dabei ist auch gezeigt, daß das freie Ende 13 des Endabschnittes 11 des Anschlußstiftes 10 annähernd bündig mit einer die Enden bzw. Spitzen der Elektroden 2 und 3 verbindenden Linie 16 angeordnet wird. Der Abstand der beiden Elektroden betrug bei einer Versuchsanordnung etwa 1,5 bis 2 mm, während der Winkel α zwischen den beiden Elektroden entsprechend dem Anwendungsfall zwischen annähernd 0° und 180° variiert werden kann. In einer zweckmäßigen Versuchsanordnung betrug er beispielsweise ungefähr 130°. Mit einem Lichtbogenstrom zwischen Anode und Kathode von 1,0 A und einer Lichtbogenbrenndauer von etwa 0,1 s wurden im praktischen Versuch gute Ergebnisse erzielt.

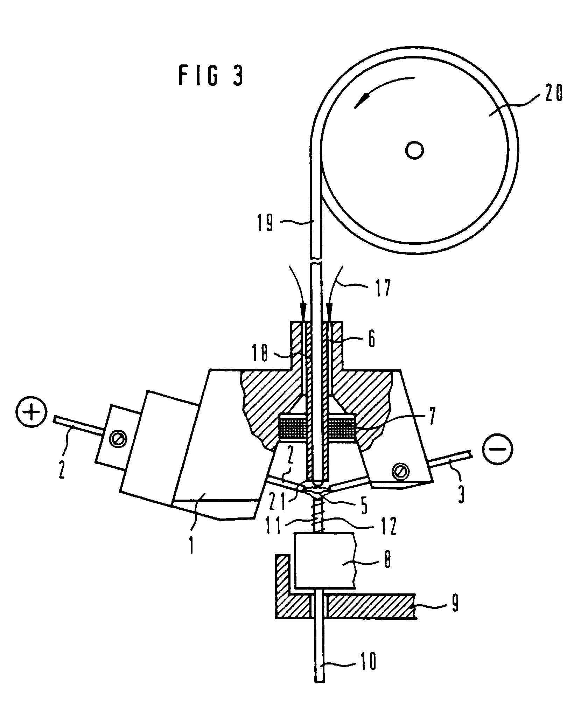

Figur 3 zeigt in einer Abwandlung von Figur 1 eine Lichtbogen-Lötvorrichtung mit einer integrierten Lötdraht-Zuführung.

Koaxial zum Strömungskanal 6 ist dort in der Halterung 1 ein beheizbares Rohr 18 angeordnet, welches beispielsweise aus Molybdän oder Chrom-Nickel bestehen kann. In dieses beheizbare Rohr 18 wird von oben ein flußmittelfreier Lötdraht 19, beispielsweise bestehend aus L-Sn60Pb40, eingeführt, der im vorliegenden Beispiel von einer Spule 20 abgewickelt wird. Am unteren Ende 21 des Rohres 18 tritt dann das Weichlot in verflüssigter Form aus, wobei die Temperatur bei etwa 200°C liegen kann, also nur wenig über dem Schmelzpunkt des Lotmaterials liegt. Das untere Ende 21 des Rohres 18 befindet sich mittig in der Nähe der Enden der beiden Elektroden 2 und 3.

In diesem Fall wird bei der erfindungsgemäßen Schutzgas-Lichtbogenlötung der Spulenkörper mittels der Aufnahme 9 so positioniert, daß das Ende des Anschlußstift-Abschnittes 11 in das am Rohrende 21 flüssig hervortretende Weichlot 19 eintaucht. Da dieses Ende des Anschlußstiftes mit dem flüssigen Weichlot zwischen den Enden der beiden Elektroden 2 und 3 sitzt, wird der Weichlottropfen beim Zünden des Lichtbogens zwischen beiden Elektroden stärker verflüssigt, so daß er in den Fügebereich zwischen dem Endabschnitt 11 des Anschlußstiftes und den Windungen des Endabschnittes 12 der Spulenwicklung verfließt und den durch den Lichtbogen abisolierten Wicklungsdraht mit dem Anschlußstift 10 verbindet. Die Brenndauer des Lichtbogens liegt dabei vorzugsweise zwischen 0,1 und 0,15 s, die Schweißstromstärke beträgt beispielsweise etwa 1 A.

## Patentansprüche

1. Verfahren zum Kontaktieren des Wicklungsdrahtes (12) einer Spule mit einem Anschlußstift (10), wobei ein Endabschnitt des Wicklungsdrahtes (12) mit mehreren Windungen um einen Endabschnitt (11) des Anschlußstiftes (10) geschlungen wird, wobei der Anschlußstift (10) dann mit einem flußmittelfreien Weichlot (14) in Kontakt gebracht und dieses schließlich durch eine berührungslose Wärmezufuhr unter Schutzgas bei Löttemperatur aufgeschmolzen wird, **dadurch gekennzeichnet**, daß der bewickelte Endabschnitt (11) des Anschlußstiftes (10) in der Nähe von zwei einander mit ihren Spitzen gegenüberstehenden Elektroden (2, 3) angeordnet wird und daß zwischen den beiden Elektroden ein Lichtbogen (5) gezündet wird, dessen Stärke und Brenndauer auf das Schmelzen des Weichlotes (14) abgestimmt ist.

2. Verfahren nach Anspruch 1, **dadurch gekennzeichnet**, daß das flußmittelfreie Weichlot (14) durch Eintauchen des Endabschnittes (11) des Anschlußstiftes (10) in ein Lötbad mit einer nur wenig über der Schmelztemperatur des Lotes liegenden Betriebstemperatur aufgebracht wird.

3. Verfahren nach Anspruch 1, **dadurch gekennzeichnet**, daß das Lot in Form eines vorgeformten Ringes auf den Endabschnitt des Anschlußstiftes aufgesteckt und danach aufgeschmolzen wird.

4. Verfahren nach einem der Ansprüche 1 bis 3, **dadurch gekennzeichnet**, daß der Anschlußstift (10) zum Löten mit seinem freien Ende (13) zwischen den Enden der beiden Elektroden (2, 3) etwa auf einer Linie (16) mit diesen bündig angeordnet wird.

5. Verfahren nach Anspruch 1, **dadurch gekennzeichnet**, daß das Weichlot (19) über ein beheizbares Rohr (18), aus welchem es in flüssiger Form austritt, im Bereich der Schutzgasatmosphäre mit dem Anschlußstift (10) in Berührung gebracht wird und daß dann der Anschlußstift (10, 11) durch den Lichtbogen (5) erwärmt wird, wodurch das Weichlot (19) in den Fügebereich des Wicklungsdraht-Endabschnittes (12) auf dem Anschlußstift (11) fließt.

6. Verfahren nach Anspruch 5, **dadurch gekennzeichnet**, daß das Weichlot (19) in Form eines Drahtes in das beheizbare Rohr (18) eingeführt und während des Durchlaufes in dem Rohr aufgeschmolzen wird.

7. Verfahren nach Anspruch 5 oder 6, **dadurch gekenneichnet**, daß durch entsprechende Einstellung der Beheizung in dem Rohr (18) das Weichlot (19) beim Austritt eine Temperatur aufweist, die nur wenig über seiner Schmelztemperatur liegt.

8. Verfahren nach einem der Ansprüche 5 bis 7, **dadurch gekennzeichnet**, daß der bewickelte Endabschnitt (11) des Anschlußstiftes in der Nähe von zwei einander mit ihren Spitzen gegenüberstehenden Elektroden (2, 3) angeordnet wird und daß zwischen den beiden Elektroden ein Lichtbogen (5) gezündet wird, dessen Stärke und Brenndauer so abgestimmt sind, daß das Weichlot (19) in den Fügebereich des Endabschnittes des Wicklungsdrahtes (12) fließt.

9. Verfahren nach einem der Ansprüche 5 bis 8, **dadurch gekennzeichnet**, daß der Anschlußstift (10) zum Löten mit seinem freien Ende (11) zwischen den Enden der beiden Elektroden (2, 3) etwa auf einer Linie mit diesen bündig angeordnet wird.

10. Vorrichtung zum Löten von Wicklungsenden (12) an Anschlußstiften (10) einer Spule, mit
- einer Aufnahme (9) für einen Spulenkörper (8) mit Anschlußstiften (10),
- einer Halterung (1) für zwei stabförmige Elektroden (2,3),
- einer Strömungsvorrichtung (6) zur Zufuhr von Schutzgas zum Bereich der beiden Elektrodenspitzen,
- einer Positionierungseinrichtung, um jeweils einen Anschlußstift (10) eines in der Aufnahme (9) befindlichen Spulenkörpers (8) mit seinem freien Ende (13) in einem vorgegebenen Abstand zu einer zugehörigen Elektrodenspitze zu positionieren, und
- einer Stromversorgung (4) für die beiden Elektroden (2,3) zur Erzeugung eines Lichtbogens (5) mit vorgegebener Stärke und Brenndauer,
**dadurch gekennzeichnet**, daß die beiden Elektroden (2,3) mit ihren Spitzen einander in einem vorgegebenen, von Null verschiedenen Winkel (α) und in einem vorgegebenen Abstand gegenüberstehen, daß die Positionierungseinrichtung eingerichtet ist, um den Anschlußstift (10) mit einem vorgegebenen Abstand zu beiden Elektrodenspitzen (2,3) in einen Mittelbereich zwischen diesen zu positionieren, und daß der Lichtbogen (5) durch entsprechende Schaltung der Stromversorgung (4) zwischen den beiden Elektroden (2,3) gezündet wird.

11. Vorrichtung nach Anspruch 10, **dadurch gekennzeichnet**, daß die Elektroden (2, 3) zueinander einen Winkel zwischen 10° und 180°, vorzugsweise von etwa 130° bilden.

12. Vorrichtung nach Anspruch 10, **gekennzeichnet durch** ein beheizbares Rohr (18) zum Zuführen von verflüssigtem Weichlot (19) in den Lötbereich, wobei die Positionierungseinrichtung jeweils einen Anschlußstift (10) eines in der Aufnahme (9) befindlichen Spulenkörpers (8) mit dem flüssigen Weichlot an der Ausgangsöffnung (21) des beheizbaren Rohres (18) in Berührung bringt.

13. Vorrichtung nach Anspruch 12, **dadurch gekennzeichnet**, daß das beheizbare Rohr (18) konzentrisch innerhalb eines Zufuhrkanals (6) für das Schutzgas angeordnet ist.

## Claims

1. Method for contacting the winding wire (12) of a coil to a connecting pin (10), an end section of the winding wire (12) being wound around an end section (11) of the connecting pin (10) using a plurality of turns, the connecting pin (10) then being brought into contact with a fluxless soft solder (14) and the latter finally being fused at soldering temperature under a protective gas by feeding heat in a contactless fashion, characterized in that the wound end section (11) of the connecting pin (10) is arranged in the vicinity of two electrodes (2, 3) having their points opposite one another, and in that an arc (5) is struck between the two electrodes, whose strength and duration is matched to the fusing of the soft solder (14).

2. Method according to Claim 1, characterized in that the fluxless soft solder (14) is applied by immersing the end section (11) of the connecting pin (10) into a solder bath at an operating temperature only slightly above the melting temperature of the solder.

3. Method according to Claim 1, characterized in that the solder is plugged in the form of a preshaped ring onto the end section of the connecting pin and fused thereafter.

4. Method according to one of Claims 1 to 3, characterized in that, for the purpose of soldering, the connecting pin (10) is arranged with its free end (13) between the ends of the two electrodes (2, 3) approximately on a line (16) flush with the latter.

5. Method according to Claim 1, characterized in that via a heatable tube (18) from which it emerges in liquid form, the soft solder (19) is brought into contact with the connecting pin (10) in the region of the protective gas atmosphere, and in that the connecting pin (10, 11) is then heated by the arc (5), as a result of which the soft solder (19) flows into the joint region of the winding wire end section (12) on the connecting pin (11).

6. Method according to Claim 5, characterized in that the soft solder (19) is introduced in the form of a wire into the heatable tube (18) and is fused in the tube while passing through.

7. Method according to Claim 5 or 6, characterized in that by appropriately setting the heating in the tube (18), upon emerging the soft solder (19) has a temperature which is only slightly above its melting temperature.

8. Method according to one of Claims 5 to 7, characterized in that the wound end section (11) of the connecting pin is arranged in the vicinity of two electrodes (2, 3) having their points opposite one another, and in that an arc (5) is struck between the two electrodes, whose strength and duration are matched such that the soft solder (19) flows into the joint region of the end section of the winding wire (12).

9. Method according to one of Claims 5 to 8, characterized in that for the purpose of soldering, the connecting pin (10) is arranged with its free end (11) between the ends of the two electrodes (2, 3) approximately on a line flush with the latter.

10. Device for soldering winding ends (12) to connecting pins (10) of a coil, having
- a receptacle (9) for a coil former (8) with connecting pins (10),
- a holder (1) for two bar-shaped electrodes (2, 3),
- a flow device (6) for feeding protective gas to the region of the two electrode points,
- a positioning device for in each case positioning the connecting pin (10) of one coil former (8) located in the receptacle (9) with its free end (13) at a prescribed spacing from an associated electrode point, and
- a power supply (4) for the two electrodes (2, 3), for the purpose of generating an arc (5) having a prescribed strength and duration,
characterized in that the two electrodes (2, 3) are opposite one another at a prescribed spacing with their points at a prescribed angle (α) differing from zero, in that the positioning device is set up in order to position the connecting pin (10) at a prescribed spacing from the two electrode points (2, 3) in a middle region between the latter, and in that the arc (5) is struck between the two electrodes (2, 3) by an appropriate circuit of the power supply (4).

11. Device according to Claim 10, characterized in that the electrodes (2, 3) form an angle of between 10° and 180°, preferably of approximately 130°, relative to one another.

12. Device according to Claim 10, characterized by a heatable tube (18) for feeding liquefied soft solder (19) into the soldering region, the positioning device respectively bringing a connecting pin (10) of a coil former (8) located in the receptacle (9) into contact with the liquid soft solder at the output opening (21) of the heatable tube (18).

13. Device according to Claim 12, characterized in that the heatable tube (18) is arranged concentrically inside a feed channel (6) for the protective gas.

## Revendications

1. Procédé d'établissement du contact du fil d'enroulement (12) d'une bobine avec une broche de raccordement (10), un segment d'extrémité du fil d'enroulement (12) étant enroulé avec plusieurs spires autour d'un segment d'extrémité (11) de la broche de raccordement (10), la broche de raccordement (10) étant alors amenée au contact d'un métal d'apport de brasage tendre (14) sans flux et celui-ci étant finalement fondu à la température de brasage par apport de chaleur sans contact sous gaz protecteur, caractérisé en ce que le segment d'extrémité (11) de la broche de raccordement (10) pourvu de l'enroulement est situé à proximité de deux électrodes (2, 3) dont les pointes sont situées l'une en face de l'autre, et en ce qu'un arc (5) est amorcé entre les deux électrodes, arc dont l'intensité et la durée sont adaptées pour la fusion du métal d'apport de brasage tendre (14).

2. Procédé selon la revendication 1, caractérisé en ce que le métal d'apport de brasage tendre (14) sans flux est appliqué en immergeant le segment d'extrémité (11) de la broche de raccordement (10) dans un bain de brasage ayant une température de service qui n'est que légèrement supérieure à la température de fusion du métal d'apport.

3. Procédé selon la revendication 1, caractérisé en ce que le métal d'apport est posé sur le segment d'extrémité de la broche de raccordement sous la forme d'un anneau préformé et est ensuite fondu.

4. Procédé selon l'une des revendications 1 à 3, caractérisé en ce que, pour le brasage, la broche de raccordement (10) est située, avec son extrémité libre (13), entre les extrémités des deux électrodes (2, 3) à une même hauteur approximativement sur une ligne (16).

5. Procédé selon la revendication 1, caractérisé en ce que le métal d'apport de brasage tendre (19) est amené au contact de la broche de raccordement (10), dans la région de l'atmosphère du gaz protecteur, par le biais d'un tube (18) pouvant être chauffé d'où il sort sous forme liquide, et en ce que la broche de raccordement (10, 11) est alors chauffée par l'arc (5), grâce à quoi le métal d'apport de brasage tendre (19) s'écoule sur la broche de raccordement (11) dans la zone de jonction du segment d'extrémité (12) du fil d'enroulement.

6. Procédé selon la revendication 5, caractérisé en ce que le métal d'apport de brasage tendre (19) est introduit dans le tube (18) pouvant être chauffé sous la forme d'un fil et est fondu pendant son passage à travers le tube.

7. Procédé selon la revendication 5 ou 6, caractérisé en ce que, grâce à un réglage approprié du chauffage dans le tube (18), le métal d'apport de brasage tendre (19) a, à sa sortie, une température qui n'est que légèrement supérieure à sa température de fusion.

8. Procédé selon l'une des revendications 5 à 7, caractérisé en ce que le segment d'extrémité (11) de la broche de raccordement pourvu de l'enroulement est situé à proximité de deux électrodes (2, 3) dont les pointes sont situées l'une en face de l'autre, et en ce qu'un arc (5) est amorcé entre les deux électrodes, arc dont l'intensité et la durée sont adaptées de manière à ce que le métal d'apport de brasage tendre (19) s'écoule dans la zone de jonction du segment d'extrémité du fil d'enroulement (12).

9. Procédé selon l'une des revendications 5 à 8, caractérisé en ce que, pour le brasage, la broche de raccordement (10) est située, avec son extrémité libre (11), entre les extrémités des deux électrodes (2, 3) à une même hauteur approximativement sur une ligne.

10. Dispositif pour braser des extrémités d'enroulement (12) sur les broches de raccordement (10) d'une bobine, comprenant
- un logement (9) pour un corps de bobine (8) pourvu de broches de raccordement (10),
- un support (1) pour deux électrodes (2, 3) en forme de barre,
- un dispositif d'écoulement (6) permettant d'alimenter le gaz protecteur dans la région des deux pointes d'électrodes,
- un dispositif de positionnement pour positionner, à chaque fois, une broche de raccordement (10) d'un corps de bobine (8) se trouvant dans le logement (9), avec son extrémité libre (13), à une distance prédéterminée par rapport à une pointe d'électrode correspondante, et
- une alimentation en courant (4) pour les deux électrodes (2, 3), servant à produire un arc (5) ayant une intensité et une durée prédéterminées,
caractérisé en ce que les deux électrodes (2, 3) ont leurs pointes situées l'une en face de l'autre, formant un angle prédéterminé (α) différent de zéro, et à une distance prédéterminée l'une par rapport à l'autre, en ce que le dispositif de positionnement est réglé pour positionner la broche de raccordement (10) dans une zone médiane entre les deux pointes d'électrodes (2, 3), à une distance prédéterminée par rapport à celles-ci, et en ce que l'arc (5) est amorcé entre les deux électrodes (2, 3) grâce à une commutation correspondante de l'alimentation en courant (4).

11. Dispositif selon la revendication 10, caractérisé en ce que les électrodes (2, 3) forment l'une par rapport à l'autre un angle compris entre 10° et 180°, mesurant de préférence environ 130°.

12. Dispositif selon la revendication 10, caractérisé par un tube (18) pouvant être chauffé et servant à alimenter le métal d'apport de brasage tendre fluidifié (19) dans la zone de brasage, le dispositif de positionnement amenant, à chaque fois, une broche de raccordement (10) d'un corps de bobine (8) se trouvant dans le logement (9) au contact du métal d'apport de brasage tendre liquide au niveau de l'ouverture de sortie (21) du tube (18) pouvant être chauffé.

13. Dispositif selon la revendication 12, caractérisé en ce que le tube (18) pouvant être chauffé est situé de manière concentrique à l'intérieur d'un canal d'alimentation (6) pour le gaz protecteur.
